# EUROPÄISCHE PATENTSCHRIFT

(11) **EP 3 326 001 B1**
(45) Veröffentlichungstag und Bekanntmachung des Hinweises auf die Patenterteilung: **27.04.2022**
(21) Anmeldenummer: 16729561.7
(22) Anmeldetag: 15.06.2016
(51) Int. Cl.: G01S 15/931, G01S 7/521, B60R 19/48, G10K 9/22, G10K 11/00, B06B 1/06

(54) **AKUSTISCHER SENSOR ZUM AUSSENDEN UND/ODER EMPFANGEN AKUSTISCHER SIGNALE**
ACOUSTIC SENSOR FOR TRANSMITTING AND/OR RECEIVING ACOUSTIC SIGNALS
SONDE ACOUSTIQUE POUR L'ÉMISSION ET/OU LA RÉCEPTION DES SIGNAUX ACOUSTIQUES

(30) Priorität: 24.07.2015 DE 102015213989
(43) Veröffentlichungstag der Anmeldung: 30.05.2018
(73) Patentinhaber: Robert Bosch GmbH, 70442 Stuttgart (DE)
(72) Erfinder: KARL, Matthias, 76275 Ettlingen (DE)
(86) Internationale Anmeldenummer: PCT/EP2016/063706
(87) Internationale Veröffentlichungsnummer: WO 2017/016740

(56) Entgegenhaltungen:
- EP-A2- 0 154 256
- DE-A1-102011 084 537

## Beschreibung

### Stand der Technik

Die vorliegende Erfindung betrifft einen akustischen Sensor zum Aussenden und/oder Empfangen akustischer Signale.

In aktuellen akustischen Sensoren, insbesondere Ultraschallsensoren, besteht zumeist eine direkte, luftdurchlässige Verbindung zwischen einer Membran des akustischen Sensors und der jeweiligen Umgebung des Sensors. Solche Ausführungen eines akustischen Sensors weisen jedoch den Nachteil auf, dass durch die Öffnungen, welche zwischen dem akustischen Wandlerelement und der Umgebung des akustischen Sensors besteht, beispielsweise Schmutz in den Sensor eintreten kann. Ferner ist eine solche Öffnung mit bloßem Auge sichtbar und führt somit zu Nachteilen bei einer optischen Gestaltung von Bauelementen, die einen solchen akustischen Sensor umfassen. Zwar sind aus dem Stand der Technik akustische Sensoren bekannt, die mit einer schützenden Membran abgedeckt sind, diese weisen jedoch zumeist den Nachteil auf, dass diese Schutzschichten den oftmals widrigen Umgebungsbedingungen, in welchen ein akustischer Sensor eigesetzt wird, nicht gewachsen sind. Als widrige Umgebungsbedingungen, insbesondere im Fahrzeugumfeld, seien insbesondere Regen, Schnee, Schmutz, verschmutzte Luft, und andere Stoffströme genannt, die sich mit hoher Relativgeschwindigkeit auf das dem akustischen Sensor zugehörige Fahrzeug zubewegen. So müssen akustische Sensoren in einem Fahrzeugumfeld beispielsweise auch dem Wasserstrahl eines Hochdruckreinigers widerstehen können.

Die EP0154256 offenbart einen akustischen Sensor, welcher eine Stützstruktur aufweist. Die DE102011084537A1 und die DE102005040081A1 beschreiben akustische Sensoren, welche mit einer Schutzschicht überdeckt sind.

### Offenbarung der Erfindung

Der erfindungsgemäße akustische Sensor zum Aussenden und/oder Empfangen akustischer Signale umfasst ein elektroakustisches Wandlerelement, welches dazu eingerichtet ist, ein akustisches Signal auszusenden und/oder zu empfangen, eine Stützstruktur, welche mehrere Kanäle aufweist und zwischen dem elektroakustischen Wandlerelement und einer Umgebung des akustischen Sensors angeordnet ist, in welche das akustische Signal ausgesendet wird oder aus welcher das akustische Signal empfangen wird, und zumindest ein Trennelement, welches durchlässig für das akustische Signal ist und die Kanäle der Stützstruktur verschließt. Es wird somit verhindert, dass bedeutende, zumeist verunreinigte Stoffströme aus der Umgebung des Sensors in den akustischen Sensor eintreten. Zugleicht wird ein mechanischer Schutz des akustischen Sensors, insbesondere des elektroakustischen Wandlerelements, gewährleistet. Insbesondere weist das Trennelement dabei eine gegenüber der Stützstruktur höhere Durchlässigkeit für das akustische Signal auf.

Die Unteransprüche zeigen bevorzugte Weiterbildungen der Erfindung.

Bevorzugt ist die Stützstruktur ein Gitter. Durch die gleichmäßige Struktur eines Gitters werden akustische Verzerrungen des akustischen Signals vermieden. Zudem wird auf einfache Weise ein sich über die gesamte Fläche der Stützstruktur erstreckender mechanischer Schutz gewährleistet.

Auch ist es vorteilhaft, wenn ein Querschnitt der Kanäle jeweils eine von dessen Höhe unterschiedliche Breite aufweist und insbesondere eine ovale Form aufweist. Dadurch wird eine Dämpfung des akustischen Signals verringert. Zudem wird insbesondere bei einer ovalen Form eine hohe Stabilität der Stützstruktur gewährleistet.

Ferner ist es vorteilhaft, wenn das zumindest eine Trennelement eine Folie ist, welche die Stützstruktur überspannt. Auf diese Weise wird ein besonders kostengünstiges Trennelement bereitgestellt, welches auf einfache Weise auf der Stützstruktur angebracht werden kann. Zudem wird auf diese Weise auch eine besonders vorteilhafte Oberfläche für den akustischen Sensor bereitgestellt, welche beispielsweise eine Lackierung des akustischen Sensors ermöglicht.

Auch ist es vorteilhaft, wenn zwischen dem zumindest einen Trennelement und der Stützstruktur zumindest ein Dämpfungselement angeordnet ist, welches zumindest teilweise aus einem kompressiblen Material, insbesondere einem Schaumstoff, geformt ist. Auf diese Weise wird ein ungewolltes Nachschwingen des Trennelementes vermieden. Zudem wird ein ungewolltes Einkoppeln von akustischen Störsignalen unterbunden, welche beispielsweise durch eine mechanische Anregung des Trennelementes, beispielsweise durch einen Fahrtwind, verursacht werden können.

Erfindungsgemäß weisen die Kanäle der Stützstruktur jeweils eine Querschnittsänderung über eine Kanallänge der Kanäle hinweg auf. Somit wird ein Schwingen des Trennelementes in Richtung der Stützstruktur bei einer durch das akustische Signal verursachten Schwingung ermöglicht. Erfindungsgemäß nimmt ein Querschnitt der Kanäle auf Seiten des Trennelementes zu. Eine Dämpfung des akustischen Signals bei einem Austritt aus dem akustischen Sensor oder einem Eintritt in den akustischen Sensor wird somit minimiert.

Ebenso vorteilhaft ist es, wenn der akustische Sensor ferner ein luftdurchlässiges Schutzelement umfasst, wobei das Trennelement zwischen der Stützstruktur und dem Schutzelement angeordnet ist. Auf diese Weise wird das Trennelement von beiden Seiten vor mechanischen Fremdeinflüssen geschützt. Dabei wird insbesondere eine ungewollte Verformung des Trennelementes unterbunden. Des Weiteren ist es vorteilhaft, wenn das Schutzelement das zumindest eine Trennelement derart überspannt, dass zwischen dem Schutzelement und dem zumindest einen Trennelement ein Abstand besteht. Durch diesen Abstand wird ein Schwingen des Trennelementes in Richtung des Schutzelementes bei einer durch das akustische Signal verursachten Schwingung ermöglicht. Somit wird eine ungewollte Dämpfung des akustischen Signals bei einem Austritt aus dem akustischen Sensor oder einem Eintritt in den akustischen Sensor minimiert.

Auch ist es vorteilhaft, wenn das elektroakustische Wandlerelement zumindest ein mikroelektromechanisches System umfasst. Ein solches mikroelektromechanisches System wird auch als MEMS-Sensor bezeichnet. Bevorzugt umfasst das elektroakustische Wandlerelement mehrere mikroelektromechanische Systeme. Somit wird eine besonders hohe Empfindlichkeit des akustischen Sensors erreicht.

Ferner ist es vorteilhaft, wenn der akustische Sensor ein Gehäuse umfasst, welches eine Kavität aufweist, in welcher das elektroakustische Wandlerelement angeordnet ist, wobei die Stützstruktur und das Trennelement die Kavität verschließen und das Gehäuse eine Druckausgleichsöffnung aufweist.

Durch solch eine Druckausgleichsöffnung wird ein Gasaustausch zwischen einem Innenbereich des Gehäuses und der Umgebung des akustischen Sensors ermöglicht. Es wird somit eine Empfindlichkeit des akustischen Sensors erhöht. Es wird vermieden, dass ein in dem akustischen Sensor eingeschlossenes Gasvolumen zu einer Dämpfung des akustischen Signals führt, da eine Schwingung des Trennelementes nicht durch einen Innendruck des akustischen Sensors verringert wird.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein erfindungsgemäßer akustischer Sensor,
- Figur 2: eine Detailansicht eines beispielhaften Kanals in einer Stützstruktur eines erfindungsgemäßen akustischen Sensors,
- Figur 3: eine Draufsicht auf eine beispielhafte Stützstruktur eines erfindungsgemäßen akustischen Sensors und

### Ausführungsformen der Erfindung

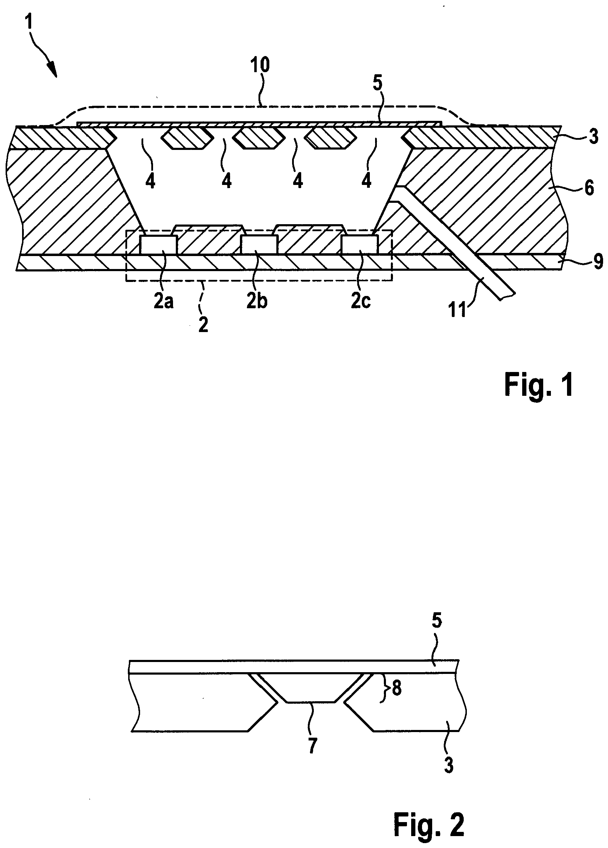

Figur 1 zeigt einen erfindungsgemäßen akustischen Sensor 1 zum Aussenden und/oder Empfangen akustischer Signale in einer ersten Ausführungsform.

Der akustische Sensor 1 weist ein elektroakustisches Wandlerelement 2 auf, welches dazu eingerichtet ist, ein akustisches Signal auszusenden und/oder zu empfangen. Das elektroakustische Wandlerelement 2 umfasst in dieser ersten Ausführungsform drei MEMS-Sensoren 2a, 2b, 2c. Ein MEMS-Sensor ist ein Sensor, welcher ein mikroelektromechanisches System umfasst. Das Wandlerelement 2 des in Figur 1 gezeigten akustischen Sensors 1 umfasst einen ersten MEMS-Sensor 2a, einen zweiten MEMS-Sensor 2b und einen dritten MEMS-Sensor 2c. Die MEMS-Sensoren 2a, 2b, 2c sind auf einer Leiterplatte 9 angeordnet. Die MEMS-Sensoren 2a, 2b, 2c sind über die Leiterplatte 9 kontaktiert. Die Leiterplatte 9 umfasst ferner eine in Figur 1 nicht gezeigte Elektronik, welche dazu geeignet ist, die MEMS-Sensoren 2a, 2b, 2c derart anzusteuern, dass diese das akustische Signal abgeben oder ein elektrisches Signal zu verarbeiten, welche von den MEMS-Sensoren 2a, 2b, 2c abgegeben wird, wenn diese durch ein akustisches Signal angeregt werden. Aufgrund der zueinander beabstandeten MEMS-Sensoren 2a, 2b, 2c können Laufzeitunterschiede separat erfasst werden und es wird ein Sensor-Array geschaffen.

Der akustische Sensor 1 umfasst ferner eine Stützstruktur 3, welche mehrere Kanäle 4 aufweist und zwischen dem elektroakustischen Wandlerelement 2 und einer Umgebung des akustischen Sensors 1 angeordnet ist, in welche das akustische Signal ausgesendet wird oder aus welcher das akustische Signal empfangen wird. Die Stützstruktur 3 ist in dieser ersten Ausführungsform ein flächiges Element, welches parallel zu der Oberfläche der Leiterplatte 9 verläuft, auf welcher die MEMS-Sensoren 2a, 2b, 2c angeordnet sind. Die Kanäle 4 der Stützstruktur 3 sind dabei in einem Bereich angeordnet, der oberhalb eines Bereiches der Leiterplatte 9 liegt, in welchem die MEMS-Sensoren 2a, 2b, 2c angeordnet sind. Die Stützstruktur 3 wird dabei von einem Gehäuse 6 des akustischen Sensors 1 getragen. In dem in Figur 1 gezeigten Querschnitt durch den akustischen Sensor 1 sind vier Kanäle 4 der Stützstruktur 3 erkenntlich. Werden die MEMS-Sensoren 2a, 2b, 2c dazu angeregt, das akustische Signal abzugeben, so wird dieses von den MEMS-Sensoren 2a, 2b, 2c ausgehend in die Richtung der Stützstruktur 3 ausgesendet.

Der akustische Sensor 1 umfasst ferner ein Trennelement 5, welches durchlässig für das akustische Signal ist und die Kanäle der Stützstruktur 3 verschließt. Das Trennelement 5 weist gegenüber der Stützstruktur eine höhere Durchlässigkeit für das akustische Signal auf. Eine höhere Durchlässigkeit bedeutet dabei, dass eine akustische Impedanz der Stützstruktur 3 größer ist als eine akustische Impedanz des Trennelementes 5. Dies wird in dieser ersten Ausführungsform dadurch erreicht, dass die Stützstruktur dicker ist als das Trennelement 5, wenn diese in dem in Figur 1 gezeigten Querschnitt betrachtet werden.

Die Stützstruktur 3 weist eine höhere mechanische Stabilität als das Trennelement gegenüber mechanischen Einflüssen auf, welche auf den akustischen Sensor 1 aus der Umgebung des akustischen Sensors 1 einwirken können.

Das Trennelement 5 ist in dieser ersten Ausführungsform eine flexible Folie, welche die Stützstruktur 3 auf der den MEMS-Sensoren 2a, 2b, 2c abgewandten Seite überspannt. Das Trennelement 5 ist in einem Bereich der Stützstruktur 3 angeordnet, in dem auch die mehreren Kanäle 4 angeordnet sind. Das Trennelement 5 ist mit der Stützstruktur 3 verbunden, beispielsweise verklebt oder verschweißt.

Der akustische Sensor 1 umfasst ferner ein luftdurchlässiges Schutzelement 10, welches aus einer der Stützstruktur 3 abgewandten Seite des Trennelementes 5 angeordnet ist und das Trennelement 5 überspannt. Das Schutzelement 10 ist in dieser ersten Ausführungsform ein flächiges Element, welches zahlreiche Durchgangsöffnungen aufweist. In dieser ersten Ausführungsform ist das Schutzelement 10 ein Blech, in welches zahlreiche Öffnungen eingestanzt sind. Das Blech ist an seinem äußeren Rand zumindest stellenweise mit der Stützstruktur 3 verbunden. Dabei ist das Schutzelement 10 derart mit der Stützstruktur 3 verbunden, dass dieses unter einer mechanischen Spannung steht und es zu einer Wölbung des Schutzelementes 10 kommt. Somit wird zwischen dem Trennelement 5 und dem Schutzelement 10 ein Abstand geschaffen. Wird das Trennelement 5 durch das akustische Signal zu einer Schwingung angeregt, so kollidiert das Trennelement 5 nicht mit dem Schutzelement 10. Es ergibt sich somit, dass das luftdurchlässige Schutzelement 10 das Trennelement 5 derart überspannt, dass zwischen dem Schutzelement und dem Trennelement 5 ein Abstand besteht, der ein Schwingen des Trennelementes in Richtung des Schutzelementes 10 bei einer durch das akustische Signal verursachten Schwingung ermöglicht.

Da das Schutzelement 10 die zuvor beschriebenen Öffnungen aufweist, ist dieses luftdurchlässig. Das Trennelement 5 liegt zwischen dem Schutzelement 10 und der Stützstruktur 3. Es ergibt sich, dass der akustische Sensor 1 in der gezeigten ersten Ausführungsform ein luftdurchlässiges Schutzelement 10 umfasst, wobei die Stützstruktur 3 auf einer ersten Seite des Trennelementes 5 angeordnet ist und das Schutzelement 10 auf einer zweiten Seite des Trennelementes 5 angeordnet ist. Das luftdurchlässiges Schutzelement 10 ist dabei auf der Seite des Trennelementes angeordnet, die auf Seiten der Umgebung des akustischen Sensors 1 liegt und von dem Wandlerelement 2 abgewandt ist.

Jeder der Kanäle 4 der Stützstruktur 3 weist auf der in Richtung des Trennelementes 5 gelegenen Seite der Stützstruktur 3 einen Durchmesser auf, der mit steigendem Abstand von der Oberfläche der Stützstruktur 3 kleiner wird. Somit weisen die Kanäle 4 der Stützstruktur 3 jeweils eine Querschnittsänderung über eine Kanallänge der Kanäle 4 hinweg auf. Ein trichterförmiger Verlauf der Kanäle 4 bildet eine Ausnehmung 8, die einen Abstand schafft, um ein Schwingen des Trennelementes 5 in Richtung der Stützstruktur bei einer durch das akustische Signal verursachten Schwingung zu ermöglichen.

Erfindungsgemäß weist eine dem Trennelement 5 abgewandte Seite der Stützstruktur möglichst große Trichter auf, die dem auszusendenden Schall einen möglichst geringen Strömungswiderstand entgegensetzen, und diesen durch die Kanäle 4 leitet.

Optional wird das Trennelement und/oder das Schutzelement mit einer Farbschicht beschichtet.

In einer optionalen Ausführungsform, welche im Wesentlichen der ersten Ausführungsform entspricht, ist zwischen dem Trennelement 5 und der Stützstruktur 3 zumindest ein Dämpfungselement 7 angeordnet, welches J zumindest teilweise aus einem kompressiblen Material, insbesondere einem Schaumstoff geformt ist. Ein Ausschnitt des akustischen Sensors 1 in dieser optionalen Ausführungsform ist in Figur 2 gezeigt. Das Dämpfungselement 7 ist derart geformt, dass dieses sich passgenau in die Ausnehmung 8 der Stützstruktur 3 einfügt. Das Dämpfungselement 7 ist aus einem Schaumstoff geformt, wie er beispielsweise bei Windschutzelementen für Mikrophone genutzt wird. In jedem der Kanäle 4 der Stützstruktur 3 ist ein entsprechendes Dämpfungselement 7 angeordnet.

Eine Steifigkeit des Dämpfungselementes 7 beziehungsweise eine Ausdehnung der Kanäle 4 und ein Ausmaß des Trennelementes 5 ist so gewählt, dass sie im Verhältnis zu der entsprechenden Größe der den Schall abstrahlenden Membran kleiner ist. Eine Tiefe der Ausnehmung 8 ist so gewählt, dass das Trennelement 5 zumindest den größten Zeitraum einer Schwingungsperiode nicht mit der Stützstruktur 3 im Bereich der Kanäle 4 kollidiert. Idealerweise wird die Tiefe so gewählt, dass das Trennelement 5 nie kollidiert, zum Beispiel ist die Tiefe 150% bis 200% so groß wie der im Bereich der Kanäle 4 auftretende maximale Schwingungshub der Luftsäule.

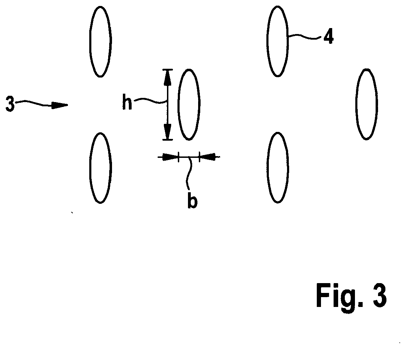

Figur 3 zeigt eine Draufsicht auf eine Stützstruktur 3 in einer alternativen Ausführungsform. In dieser alternativen Ausführungsform weisen die Kanäle 4 der Stützstruktur 3 eine ovale Form auf. Somit weist jeder der Kanäle 4 einen Querschnitt auf, der jeweils eine von dessen Höhe unterschiedliche Breite aufweist. Die Kanäle 4 sind gleichmäßig über eine Oberfläche der Stützstruktur 3 verteilt.

In allen Ausführungsformen ist es vorteilhaft, wenn das elektroakustische Wandlerelement 2 von einem Gehäuse 6 umschlossen ist, wobei die Stützstruktur 3 und das Trennelement 5 eine akustische Öffnung in dem Gehäuse 6 bilden und das Gehäuse 6 ferner eine Druckausgleichsöffnung umfasst, die einen Gasaustausch zwischen einem Innenbereich des Gehäuses 6 und der Umgebung des akustischen Sensors 1 ermöglicht. Mit anderen Worten ist es also vorteilhaft, dass der akustische Sensor 1 ein Gehäuse 6 umfasst, welches eine Kavität aufweist, in welcher das elektroakustische Wandlerelement 2 angeordnet ist, wobei die Stützstruktur 3 und das Trennelement 5 die Kavität verschließen und das Gehäuse 6 eine Druckausgleichsöffnung aufweist.

Figur 1 zeigt eine beispielhafte Druckausgleichsöffnung, welche durch einen Kanal 11 gebildet wird. Der Kanal 11 verbindet den zwischen dem Trennelement 5 und dem elektroakustischen Wandlerelement 2 gelegenen Hohlraum mit einer Umgebung des akustischen Sensors 1. Der Kanal 11 führt dabei zu einer auf einer Rückseite des akustischen Sensors 1 gelegenen Umgebung des akustischen Sensors 1. Dies ist vorteilhaft, da diese Seite bei einem Verbau des akustischen Sensors 1 zumeist derart angeordnet werden kann, dass diese geringeren Umwelteinflüssen ausgesetzt ist. Der Kanal 11 ist optional mit einem Ventil versehen, welche einen Stofftransport in den akustischen Sensor 1 hinein erschwert. Bevorzugt ist der Kanal 11 derart angeordnet, dass ein Austritt von Stoffen aus dem Sensor von der Schwerkraft unterstützt wird.

Die Stützstruktur 3 ist aus einem schallharten Material gebildet, welche insbesondere formschlüssig mit dem Gehäuse 6 des akustischen Sensors 1 abschließt. So kann die Stützstruktur und/oder das Gehäuse 6 die circa 2 mm bis 4 mm dicke Haut eines Stoßfängers oder eines anderen Karosserieteiles, sein. Die Kanäle 4 der Stützstruktur 3 werden beispielsweise durch Stanzen oder durch Schneiden mittels eines Lasers in die Stützstruktur 3 eingebracht. Insbesondere durch einen Laser können besonders viele kleine Kanäle 4 in die Stützstruktur eingebracht werden.

Durch die Verwendung mehrerer kleiner Kanäle 4 bekommt das Trennelement 5 im Falle von Kräften aus der Sichtseite, zum Beispiel in Form stumpfer Stöße beziehungsweise Steinschläge, bespritzen mit Hochdruckreinigern oder ähnlichen, eine höhere Stabilität, als wenn lediglich eine Membran über eine Öffnung des akustischen Sensors gespannt wäre. Andererseits wirkt natürlich jede, eine Luftschwingung durch das starre Material der Stützstruktur 3 begrenzende Innenflächen als eine verlustbringende Strömungsbremse. Um einen besonders effizienten Kompromiss zwischen Verlustminimierung und mechanischem Schutz zu erreichen, wird ein Öffnungsmaß der Kanäle 4 von circa 1 mm als vorteilhaft betrachtet. Aber auch Öffnungsmaße im Bereich von 0,1 mm bis 5 mm sind vorteilhaft. Die Form der Kanäle 4, insbesondere deren Querschnitt, kann beliebig gestaltet werden.

## Patentansprüche

1. Akustischer Sensor (1) zum Aussenden und/oder Empfangen akustischer Signale, umfassend:
ein elektroakustisches Wandlerelement (2), welches dazu eingerichtet ist, ein akustisches Signal auszusenden und/oder zu empfangen,
eine Stützstruktur (3), welche mehrere Kanäle (4) aufweist und zwischen dem elektroakustischen Wandlerelement (2) und einer Umgebung des akustischen Sensors (1) angeordnet ist, in welche das akustische Signal ausgesendet wird oder aus welcher das akustische Signal empfangen wird, und
zumindest ein Trennelement (5), welches durchlässig für das akustische Signal ist und die Kanäle (4) der Stützstruktur (3) verschließt,
wobei
die Kanäle (4) der Stützstruktur (3) jeweils eine Querschnittsänderung über eine Kanallänge der Kanäle (4) hinweg aufweisen, wobei der Querschnitt der Kanäle auf einer in Richtung des Trennelementes (5) gelegenen Seite der Stützstruktur (3) trichterförmig zunimmt,
**dadurch gekennzeichnet, dass**
der Querschnitt der Kanäle auf einer dem Trennelement (5) abgewandten Seite der Stützstruktur (3) ebenfalls trichterförmig zunimmt.

2. Akustischer Sensor (1) gemäß Anspruch 1, **dadurch gekennzeichnet, dass** die Stützstruktur (3) ein Gitter ist.

3. Akustischer Sensor (1) gemäß einem der vorangehenden Ansprüche, **dadurch gekennzeichnet, dass** ein Querschnitt der Kanäle (4) in Draufsicht auf die Stützstruktur jeweils eine von dessen Höhe unterschiedliche Breite aufweist und insbesondere eine ovale Form aufweist, wobei die Stützstruktur als flächiges Element ausgebildet ist.

4. Akustischer Sensor (1) gemäß einem der vorangehenden Ansprüche, **dadurch gekennzeichnet, dass** das zumindest eine Trennelement (5) eine Folie ist, welche die Stützstruktur (3) überspannt.

5. Akustischer Sensor (1) gemäß einem der vorangehenden Ansprüche, **dadurch gekennzeichnet, dass** zwischen dem zumindest einen Trennelement (5) und der Stützstruktur (3) zumindest ein Dämpfungselement (7) angeordnet ist, welches zumindest teilweise aus einem kompressiblen Material, insbesondere einem Schaumstoff, geformt ist.

6. Akustischer Sensor (1) gemäß einem der vorangehenden Ansprüche, **dadurch gekennzeichnet, dass** der akustische Sensor (1) ferner ein luftdurchlässiges Schutzelement (10) umfasst, wobei das Trennelement (5) zwischen der Stützstruktur (3) und dem Schutzelement (10) angeordnet ist.

7. Akustischer Sensor (1) gemäß Anspruch 6, **dadurch gekennzeichnet, dass** das Schutzelement (10) das zumindest eine Trennelement (5) derart überspannt, dass zwischen dem Schutzelement (10) und dem zumindest einen Trennelement (5) ein Abstand besteht.

8. Akustischer Sensor (1) gemäß einem der vorangehenden Ansprüche, **dadurch gekennzeichnet, dass** das elektroakustische Wandlerelement (2) zumindest ein Mikro-Elektromechanisches System (2a, 2b, 2c) umfasst.

9. Akustischer Sensor (1) gemäß einem der vorangehenden Ansprüche, **dadurch gekennzeichnet, dass** der akustische Sensor (1) ein Gehäuse (6) umfasst, welches eine Kavität aufweist, in welcher das elektroakustische Wandlerelement (2) angeordnet ist, wobei die Stützstruktur (3) und das Trennelement (5) die Kavität verschließen und das Gehäuse (6) eine Druckausgleichsöffnung (11) aufweist.

## Claims

1. Acoustic sensor (1) for emitting and/or receiving acoustic signals, comprising:
an electroacoustic transducer element (2) which is designed to emit and/or to receive an acoustic signal,
a supporting structure (3) which has a plurality of channels (4) and is arranged between the electroacoustic transducer element (2) and an area surrounding the acoustic sensor (1), into which area the acoustic signal is emitted or from which area the acoustic signal is received, and
at least one separating element (5) which is permeable to the acoustic signal and closes the channels (4) of the supporting structure (3),
wherein
the channels (4) of the supporting structure (3) each exhibit a change in cross section over a length of the channels (4), wherein the cross section of the channels increases in a funnel-shaped manner on a side of the supporting structure (3) in the direction of the separating element (5),
**characterized in that**
the cross section of the channels likewise increases in a funnel-shaped manner on a side of the supporting structure (3) facing away from the separating element (5) .

2. Acoustic sensor (1) according to Claim 1, **characterized in that** the supporting structure (3) is a lattice.

3. Acoustic sensor (1) according to either of the preceding claims, **characterized in that** a cross section of the channels (4) has, in a plan view of the supporting structure, a width which is different from its height in each case and in particular has an oval shape, wherein the supporting structure is in the form of a flat element.

4. Acoustic sensor (1) according to one of the preceding claims, **characterized in that** the at least one separating element (5) is a film which spans the supporting structure (3).

5. Acoustic sensor (1) according to one of the preceding claims, **characterized in that** at least one damping element (7) is arranged between the at least one separating element (5) and the supporting structure (3) and is at least partially formed from a compressible material, in particular a foam.

6. Acoustic sensor (1) according to one of the preceding claims, **characterized in that** the acoustic sensor (1) further comprises an air -permeable protective element (10), wherein the separating element (5) is arranged between the supporting structure (3) and the protective element (10).

7. Acoustic sensor (1) according to Claim 6, **characterized in that** the protective element (10) spans the at least one separating element (5) in such a way that there is a distance between the protective element (10) and the at least one separating element (5).

8. Acoustic sensor (1) according to one of the preceding claims, **characterized in that** the electroacoustic transducer element (2) comprises at least one micro-electromechanical system (2a, 2b, 2c).

9. Acoustic sensor (1) according to one of the preceding claims, **characterized in that** the acoustic sensor (1) comprises a housing (6) which has a cavity in which the electroacoustic transducer element (2) is arranged, wherein the supporting structure (3) and the separating element (5) close the cavity and the housing (6) has a pressure equalization opening (11).

## Revendications

1. Capteur acoustique (1) destiné à émettre et/ou recevoir des signaux acoustiques, ledit capteur acoustique comprenant :
un élément transducteur électroacoustique (2) qui est conçu pour émettre et/ou recevoir un signal acoustique, une structure de support (3) qui comporte une pluralité de canaux (4) et qui est disposée entre l'élément transducteur électroacoustique (2) et un environnement du capteur acoustique (1), dans lequel le signal acoustique est émis ou depuis lequel le signal acoustique est reçu, et
au moins un élément de séparation (5) qui est transparent au signal acoustique et qui ferme les canaux (4) de la structure de support (3),
les canaux (4) de la structure de support (3) présentant chacun un changement de section transversale sur une longueur des canaux (4), la section transversale des canaux augmentant en forme d'entonnoir sur un côté de la structure de support (3) qui est dirigé vers l'élément de séparation (5),
**caractérisé en ce que**
la section transversale des canaux sur un côté de la structure de support (3) qui est opposé à l'élément de séparation (5) augmente également en forme d'entonnoir.

2. Capteur acoustique (1) selon la revendication 1, **caractérisé en ce que** la structure de support (3) est une grille.

3. Capteur acoustique (1) selon l'une des revendications précédentes, **caractérisé en ce qu'**une section transversale des canaux (4) en vue de dessus de la structure de support a une largeur différente de sa hauteur et a notamment une forme ovale, la structure de support étant conçue comme un élément sensiblement bidimensionnel.

4. Capteur acoustique (1) selon l'une des revendications précédentes, **caractérisé en ce que** l'au moins un élément de séparation (5) est un film qui est tendu par-dessus la structure de support (3).

5. Capteur acoustique (1) selon l'une des revendications précédentes, **caractérisé en ce qu'**au moins un élément amortisseur (7), qui est au moins partiellement en un matériau compressible, notamment une mousse, est disposé entre l'au moins un élément de séparation (5) et la structure de support (3).

6. Capteur acoustique (1) selon l'une des revendications précédentes, **caractérisé en ce que** le capteur acoustique (1) comprend en outre un élément de protection (10) perméable à l'air, l'élément de séparation (5) étant disposé entre la structure de support (3) et l'élément de protection (10).

7. Capteur acoustique (1) selon la revendication 6, **caractérisé en ce que** l'élément de protection (10) est tendu par-dessus l'au moins un élément de séparation (5) de manière à ménager une distance entre l'élément de protection (10) et l'au moins un élément de séparation (5).

8. Capteur acoustique (1) selon l'une des revendications précédentes, **caractérisé en ce que** l'élément transducteur électroacoustique (2) comprend au moins un système micro-électromécanique (2a, 2b, 2c) .

9. Capteur acoustique (1) selon l'une des revendications précédentes, **caractérisé en ce que** le capteur acoustique (1) comprend un boîtier (6) qui comporte une cavité dans laquelle est disposé l'élément transducteur électroacoustique (2), la structure de support (3) et l'élément de séparation (5) fermant la cavité et le boîtier (6) comportant une ouverture de compensation de pression (11).
